# FASCICULE DE BREVET EUROPEEN

(11) **EP 3 150 488 B1**
(45) Date de publication et mention de la délivrance du brevet: **03.01.2018**
(21) Numéro de dépôt: 16178868.2
(22) Date de dépôt: 11.07.2016
(51) Int. Cl.: B64C 27/00

(54) **AERONEF ET GROUPE MOTOREDUCTEUR D'AERONEF**
LUFTFAHRZEUG UND UNTERSETZUNGSGETRIEBEEINHEIT EINES LUFTFAHRZEUGS
AIRCRAFT AND AIRCRAFT GEAR MOTOR ASSEMBLY

(30) Priorité: 08.09.2015 FR 1501863
(43) Date de publication de la demande: 05.04.2017
(73) Titulaire: Airbus Helicopters, 13725 Marignane Cedex (FR)
(72) Inventeur: MARIE, Adrien, 13090 Aix-en-Provence (FR); BELMONTE, Jérôme, 13100 Aix-en-Provence (FR); ZAMPONI, Laurent, 13127 Vitrolles (FR)
(74) Mandataire: GPI & Associés

(56) Documents cités:
- EP-A1- 1 216 190
- EP-A1- 2 910 469
- FR-A1- 3 008 679
- GB-A- 2 160 840

## Description

La présente invention concerne un groupe motoréducteur d'un aéronef, et un aéronef muni de ce groupe.

L'invention se situe notamment dans le domaine des installations motrices de giravion.

Les giravions sont généralement équipés d'au moins un rotor entraîné en rotation par un groupe motoréducteur. Ce groupe motoréducteur est pourvu d'au moins un moteur et d'une boîte de transmission de puissance, la boîte de transmission de puissance étant interposée entre le moteur et le rotor.

Ce moteur peut être un moteur à turbines ou à pistons relié par une chaîne de transmission de puissance à la boîte de transmission de puissance.

Une telle chaîne de transmission de puissance comprend un arbre de transmission de puissance s'étendant entre un arbre de sortie du moteur et un arbre d'entrée de la boîte de transmission de puissance. L'arbre de transmission peut comprendre un ou plusieurs tronçons.

De plus, un carter du moteur peut être relié à un carter de la boîte de transmission de puissance par une liaison articulée.

Le groupe motopropulseur est alors relativement encombrant et présente une masse non négligeable.

De plus, l'agencement de la boîte de transmission de puissance et des moteurs a de fait un impact direct sur la position du centre de gravité de l'aéronef.

Par ailleurs, la chaîne de transmission de puissance d'un moteur à une boîte de transmission de puissance doit être fiable et robuste.

Selon une première technologie, la boîte de transmission de puissance et les moteurs sont conçus comme étant des ensembles séparés possédant leur propre système de fixation pour être fixés sur un aéronef.

Par exemple, la boîte de transmission de puissance et/ou les moteurs sont fixés par un assemblage boulonné sur un plancher mécanique d'un giravion.

Cette architecture est intéressante mais ne permet pas de filtrer des éventuelles vibrations.

Selon une autre réalisation, la boîte de transmission de puissance et/ou les moteurs sont fixés à un châssis équipé de moyens d'absorption d'énergie et/ou de déplacement. De tels moyens d'absorption d'énergie et/ou de déplacement comportent un matériau souple permettant d'absorber des chocs et des vibrations. Un moyen d'absorption d'énergie et/ou de déplacement est connu sous la marque silentbloc.

Selon une autre réalisation, la boîte de transmission de puissance peut être suspendue à la structure d'un aéronef par un système de suspension. Ce système de suspension peut comprendre par exemple des barres de suspension et des moyens de suspension. On se référera à la littérature pour obtenir un enseignement à ce sujet.

De plus, un moteur est attaché à cette structure de l'aéronef par des pieds, et le cas échéant par des moyens d'absorption d'énergie et/ou de déplacement.

Ces réalisations sont intéressantes mais impliquent l'utilisation de pièces multiples entre la boîte de transmission de puissance, le moteur et la structure de l'aéronef.

Le document US 6364249 propose un groupe motoréducteur rigide. Selon cet enseignement, un moteur est directement boulonné sur une boîte de transmission de puissance.

Une telle réalisation permet de rapprocher le moteur de l'axe d'un mât d'entraînement en rotation d'un rotor, ce mât étant lui même mis en rotation par la boîte de transmission de puissance. De plus, les systèmes de lubrification du moteur et de la boîte de transmission de puissance sont mutualisés.

Cette réalisation est intéressante mais la fixation d'un moteur à une boîte de transmission de puissance peut induire un couplage des modes de vibrations de la boîte de transmission de puissance et des modes de vibrations du moteur.

La mutualisation des systèmes de lubrification peut en outre s'avérer contraignante, notamment selon des aspects de sécurité des vols.

Le document FR 3008679 présente une installation motrice munie d'une boîte de transmission de puissance, d'un moteur à turbine et d'un échangeur thermique. La boîte de transmission de puissance comprend un mât rotor sensiblement vertical. La boîte de transmission de puissance comporte au moins un étage de réduction de vitesse de rotation agencé dans un carter plat et un pylône. Le moteur à turbine comporte un carter moteur et un arbre de sortie saillant du carter moteur, l'arbre de sortie pénétrant dans le carter plat et étant sensiblement parallèle au mât rotor. Le carter moteur est longitudinalement décalé par rapport au pylône et n'est pas en contact avec ce pylône. L'échangeur thermique s'étend longitudinalement en arrière du moteur à turbine, le mât rotor étant à l'inverse situé longitudinalement devant le moteur à turbine.

Les documents EP 2910469, EP 1216190 et GB 2160840 sont aussi connus.

La présente invention a alors pour objet de proposer un groupe motoréducteur alternatif visant à au moins limiter un des inconvénients précités.

L'invention vise donc un groupe motoréducteur comportant une boîte de transmission de puissance et au moins un moteur, la boîte de transmission de puissance étant munie d'un système de suspension destiné à suspendre la boîte de transmission de puissance à une structure. La boîte de transmission de puissance et le moteur représentent respectivement deux équipements distincts, le moteur entraînant mécaniquement ladite boîte de transmission de puissance par une ligne d'arbre de liaison s'étendant le long d'un axe d'entraînement.

En outre, ledit au moins un moteur est porté uniquement par la boîte de transmission de puissance au travers d'un système d'accrochage, le système d'accrochage comprenant au moins trois barres d'accrochage reliant chacune un carter extérieur de la boîte de transmission de puissance à une enveloppe extérieure du moteur, le système d'accrochage comprenant un organe de liaison fixé au carter extérieur et au moteur, par exemple à l'enveloppe extérieure du moteur, l'organe de liaison étant rigide en torsion autour de l'axe d'entraînement et permettant un déplacement relatif prédéterminé entre la boîte de transmission de puissance et le moteur.

En outre, le groupe motoréducteur peut comprendre plusieurs moteurs portés chacun par la boîte de transmission de puissance.

L'expression « la boîte de transmission de puissance et le moteur représentent respectivement deux équipements distincts » signifie que le moteur et la boîte de transmission de puissance peuvent être fabriqués séparément puis accouplés l'un à l'autre pour l'obtention du groupe motoréducteur. Le moteur et la boîte de transmission de puissance ne représentent pas deux parties d'un unique équipement, contrairement à certains enseignements.

Par ailleurs, le moteur peut être de tout type. Ce moteur peut notamment être un moteur thermique de type turbomoteur ou moteur à pistons.

Dès lors, le moteur n'est pas muni de moyens de fixation à fixer à un plancher. En effet, ce moteur est porté par la boîte de transmission de puissance au travers des barres d'accrochage. De plus, l'enveloppe extérieure du moteur est aussi reliée au carter extérieur de la boîte de transmission par un organe de liaison.

L'expression « rigide en torsion » signifie que l'organe de liaison ne se déforme pas en torsion lors d'une utilisation normale du groupe motoréducteur. A l'inverse, le terme « souple » fait référence à une possible déformation. L'organe de liaison est alors rigide en torsion autour de l'axe d'entraînement de la ligne d'arbre de liaison mais relativement souple dans d'autres directions.

Lors de la rotation de la ligne d'arbre de liaison autour de l'axe d'entraînement, l'organe de liaison permet d'éviter une rotation du moteur autour de l'axe d'entraînement par rapport à la boîte de transmission de puissance. Par ailleurs, l'organe de liaison présente une souplesse selon d'autres directions autorisant sa déformation pour permettre un désalignement éventuel entre le moteur et la boîte de transmission de puissance.

En outre, les barres d'accrochage permettent de suspendre le moteur à la boîte de transmission. Ces barres d'accrochage assurent le maintien du moteur sur la boîte de transmission de puissance. La boîte de transmission de puissance supporte alors la masse du moteur et reprend les différents efforts dynamiques auxquels le moteur est soumis.

L'isolation acoustique entre un plancher mécanique d'une structure et le groupe motoréducteur est ainsi améliorée grâce à la suppression de l'interface entre le plancher mécanique et le moteur. La conception de la cellule d'un véhicule est alors simplifiée.

La fixation du moteur à la boîte de transmission de puissance permet de plus de positionner le moteur à proximité de la boîte de transmission de puissance. Le groupe motoréducteur est alors compact et peut posséder une masse optimisée. De plus, cette architecture peut permettre favorablement de rapprocher le centre de gravité du groupe motoréducteur d'un axe de rotation d'un mât rotor mis en mouvement par la boîte de transmission de puissance.

Les caractéristiques intrinsèques de raideurs et d'amortissement des barres d'accrochage peuvent de plus permettre d'atténuer les vibrations transmises au moteur par la boîte de transmission de puissance et inversement.

En outre, les barres d'accrochage peuvent limiter les déplacements du moteur par rapport à la boîte de transmission en raison de leur positionnement et de leur raideur. La raideur en traction/compression des barres d'accrochage peut à cet effet être supérieure à la raideur de l'organe de liaison selon des directions parallèles à l'axe d'entraînement ou orthogonales à cet axe d'entraînement.

Par conséquent, le moteur et la boîte de transmission sont accouplés mécaniquement par l'intermédiaire d'un système isostatique dont les barres d'accrochage et l'organe de liaison possèdent une souplesse et un amortissement structural spécifiques permettant par exemple :
- de rapprocher au maximum le moteur de la boîte de transmission de puissance,
- de faire supporter le moteur par la boîte de transmission de puissance afin que seule la boîte de transmission de puissance soit liée à un plancher,
- de filtrer au travers des barres d'accrochage les vibrations en provenance d'un rotor mis en mouvement par la boîte de transmission de puissance, et les vibrations en provenance du moteur.

Bien que liés physiquement par cette structure isostatique, le moteur et la boîte de transmission de puissance représentent deux ensembles distincts et séparés. Le moteur et la boîte de transmission de puissance assurent respectivement et de manière conventionnelle les fonctions de génération de puissance et de transmission de la puissance mécanique par exemple vers au moins un rotor et des accessoires.

Dès lors, le moteur et la boîte de transmission de puissance possèdent leurs propres systèmes de lubrification. Les systèmes de lubrification du moteur et de la boîte de transmission de puissance sont séparés afin de permettre d'optimiser au mieux les fonctionnements spécifiques de ces deux ensembles. La ségrégation des systèmes de lubrification permet en effet d'optimiser indépendamment la lubrification du moteur et la lubrification de la boîte de transmission de puissance qui sont soumis à des contraintes différentes. En effet, la boîte de transmission de puissance est soumise à des pressions de contact élevées et des exigences de tenue mécanique suite à une perte de lubrifiant, alors que le moteur est soumis à des vitesses de rotation et des températures de fonctionnement élevées. Cette architecture offre donc une robustesse accrue par rapport à certains arts antérieurs.

De même, un premier étage de réduction de vitesse peut être intégré dans le moteur pour ne pas être soumis aux mêmes exigences de lubrification que la boîte de transmission de puissance.

Cette architecture peut donc permettre à la fois de rapprocher le moteur de la boîte de transmission de puissance, de simplifier le plancher mécanique portant le groupe motoréducteur en liant uniquement la boite de transmission de puissance à ce plancher mécanique, tout en garantissant un fonctionnement indépendant du moteur et de la boîte de transmission de puissance grâce à la séparation des deux ensembles.

Le groupe motoréducteur peut de plus comporter une ou plusieurs des caractéristiques qui suivent.

Dès lors, chaque barre d'accrochage s'étendant entre deux extrémités, chaque extrémité peut être munie d'une articulation à rotule.

De telles articulations à rotule permettent aux barres d'accrochage de tolérer un déplacement relatif entre la boîte de transmission de puissance et le moteur.

En outre, chaque barre d'accrochage s'étendant le long d'une droite, les droites des barres d'accrochage peuvent être concourantes.

Ce positionnement des barres d'accrochage permet de limiter le déplacement relatif autorisé entre la boîte de transmission de puissance et le moteur.

En particulier, ces droites des barres d'accrochage sont concourantes au niveau du centre de gravité du moteur.

L'expression « au niveau du centre de gravité » signifie que le point de ralliement des droites suivies par les barres d'accrochage se situe dans une sphère centrée sur le centre de gravité du moteur et présentant un rayon compris entre 0 millimètres et 10 millimètres.

Au niveau du moteur, les barres sont concourantes vers un point proche du centre de gravité du moteur afin reprendre au mieux les efforts statiques et dynamiques subis et ainsi limiter les déplacements de la turbine.

Au niveau de la boîte de transmission de puissance, les points d'accrochage des barres d'accrochage sont favorablement situés sur les parties fortes du carter extérieur. En particulier, les points d'accrochage peuvent être localisés au niveau d'un moyen de roulement interposé entre le carter extérieur et un mât rotor pour des barres d'accrochage supérieures, et au niveau de la couronne d'un train épicycloïdal pour des barres d'accrochage inférieures.

Par ailleurs, au moins une barre d'accrochage peut coopérer avec au moins un moyen d'absorption d'énergie et/ou de déplacement.

Le moyen d'absorption d'énergie et/ou de déplacement permet de limiter les risques de transmission de vibrations au travers d'une barre d'accrochage.

Le moyen d'absorption d'énergie et/ou de déplacement peut comporter un bloc en élastomère.

Par exemple, les barres d'accrochage sont fixées au carter extérieur et/ou à l'enveloppe extérieure par le biais d'un moyen de type silentbloc.

Des articulations à rotule peuvent aussi comprendre une chape en élastomère.

Par ailleurs, la ligne d'arbre de liaison peut présenter un arbre de liaison relié par un dispositif de liaison dit « dispositif de liaison amont » au moteur, le dispositif de liaison amont présentant une liberté de déplacement prédéterminée par rapport au moteur.

De même, la ligne d'arbre de liaison présente un arbre de liaison relié par un dispositif de liaison dit « dispositif de liaison aval » à la boîte de transmission de puissance, ledit dispositif de liaison aval présentant une liberté de déplacement prédéterminée par rapport à la boîte de transmission de puissance.

Les dispositifs de liaison font office d'interface entre la ligne d'arbre de liaison et le moteur ou la boîte de transmission de puissance. Ces dispositifs de liaison permettent d'accepter un désalignement entre la sortie du moteur et l'entrée de la boîte de transmission de puissance, sans transmettre d'effort tranchant.

Ces dispositifs de liaison peuvent comprendre des systèmes d'accouplement souple permettant la transmission du couple tout en étant désalignés, tels que des systèmes à soufflet, un cardan, des diaphragmes, etc.

Eventuellement, au moins un desdits dispositifs de liaison amont et aval présente des cannelures bombées.

Un tel dispositif de liaison à cannelures bombées présente l'avantage d'être relativement simple.

Par ailleurs, l'organe de liaison peut être rigide uniquement en torsion autour dudit axe d'entraînement, l'organe de liaison étant souple en torsion autour de directions comprises dans un plan perpendiculaire à l'axe d'entraînement, l'organe de liaison étant souple en compression et en traction selon ledit axe d'entraînement.

L'organe de liaison est boulonné à la boîte de transmission de puissance et au moteur pour servir d'interface entre ce moteur et cette boîte de transmission de puissance. L'organe de liaison permet au moteur de se déplacer par rapport à la boîte de transmission de puissance. Seul le contre-couple moteur est repris par cet organe de liaison.

Par ailleurs, l'organe de liaison peut prendre diverses formes. L'organe de liaison peut être du type liaison cardans et glissières, ou peut comprendre toute autre liaison permettant de bloquer uniquement la rotation autour de l'axe de la ligne d'arbre de liaison.

L'organe de liaison peut notamment comporter un soufflet entourant ladite ligne d'arbre de liaison, rigide uniquement en torsion autour de l'axe d'entraînement, mais souple dans les autres directions.

L'organe de liaison peut aussi présenter une plaque annulaire interne s'étendant radialement à partir du soufflet vers l'axe d'entraînement, un joint dynamique étant agencé entre la plaque et la ligne d'arbre de liaison.

Le soufflet est muni d'un joint dynamique autour de la ligne d'arbre de liaison afin d'assurer la ségrégation des lubrifiants des systèmes de lubrification du moteur et de la boîte de transmission de puissance. Un système de drainage peut être installé dans le soufflet pour détecter la provenance d'une éventuelle fuite.

Par ailleurs, une cloison pare-feu peut être installée entre un compresseur du moteur et une turbine basse pression du moteur.

Selon un autre aspect, le système de suspension peut comporter au moins trois barres de suspension et/ou un moyen de reprise de couple.

La boîte de transmission de puissance peut être suspendue à la structure d'un aéronef par un système de suspension usuel. Ce système de suspension peut comprendre par exemple des barres de suspension et des moyens de reprise de couple. On se référera à la littérature pour obtenir un enseignement à ce sujet.

Par ailleurs, la boîte de transmission de puissance peut être munie d'un mât destiné à mettre en rotation un rotor d'un aéronef, tel qu'un rotor principal participant à la sustentation et/ou la propulsion de l'aéronef.

La boîte de transmission de puissance peut aussi être munie d'une roue dentée destinée à entraîner une chaîne de transmission de puissance.

Outre un groupe motoréducteur, l'invention vise aussi un aéronef comportant ce groupe motoréducteur.

L'invention et ses avantages apparaîtront avec plus de détails dans le cadre de la description qui suit avec des exemples donnés à titre illustratif en référence aux figures annexées qui représentent :
- la figure 1, une vue en trois dimensions d'un aéronef selon l'invention comprenant un groupe motoréducteur,
- la figure 2, une vue de dessus d'un groupe motoréducteur,
- la figure 3, une vue présentant une barre d'accrochage coopérant avec un moyen d'absorption d'énergie et/ou de déplacement,
- la figure 4, une coupe d'un groupe motoréducteur,
- la figure 5, une vue explicitant des cannelures bombées, et
- la figure 6, une coupe d'un organe de liaison de type soufflet.

Les éléments présents dans plusieurs figures distinctes sont affectés d'une seule et même référence.

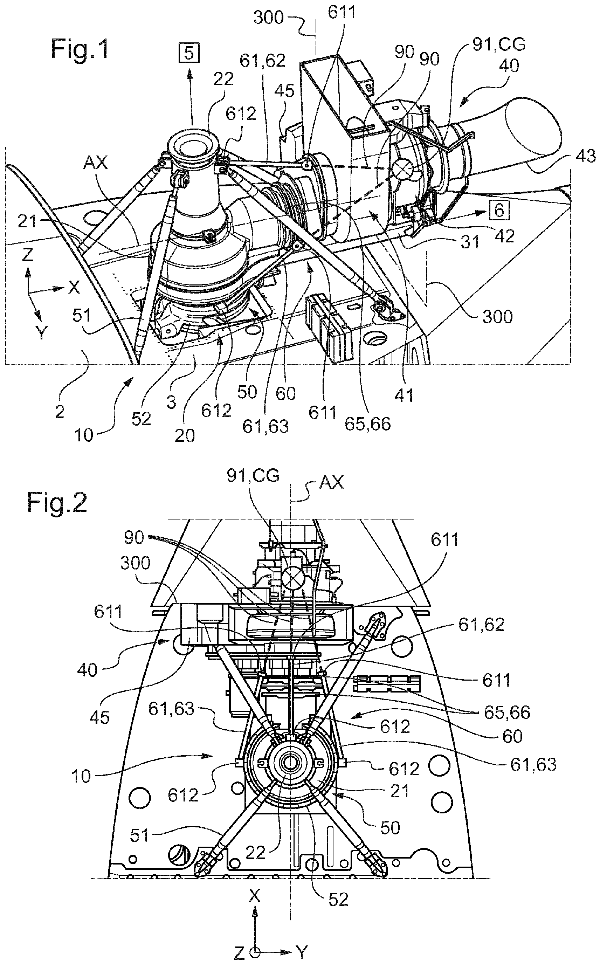

On note que trois directions X, Y et Z orthogonales les unes par rapport aux autres sont représentées sur les figures 1 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La première direction X et la deuxième direction Y définissent un plan horizontal.

La première direction X et la troisième direction Z définissent un plan antéropostérieur des pièces représentées.

La figure 1 présente un groupe motoréducteur 10 selon l'invention.

En particulier, le groupe motoréducteur 10 est porté par une structure 2 d'une cellule 3 d'un aéronef. Néanmoins, le groupe motoréducteur peut être agencé sur d'autres types de structures.

Le groupe motoréducteur 10 est muni d'au moins un moteur 40 et d'une boîte de transmission de puissance 20 mise en mouvement par le moteur 40.

La boîte de transmission de puissance 20 entraîne un mât rotor 22 mobile en rotation par rapport à un carter extérieur 21 de cette boîte de transmission de puissance 20. Ce mât rotor 22 s'étend en élévation par exemple pour mettre en rotation un rotor 5 participant à la sustentation et/ou à la propulsion de l'aéronef.

En outre, la boîte de transmission de puissance 20 peut mettre en mouvement une chaîne de transmission 31 de puissance. La chaîne de transmission 31 s'étend longitudinalement par exemple pour mettre en rotation un rotor arrière 6 d'un aéronef.

Cette boîte de transmission de puissance 20 est suspendue à la structure 2 par un système de suspension 50 élastique. Ce système de suspension 50 élastique est éventuellement pourvu d'au moins trois barres de suspension 51. Chaque barre de suspension 51 s'étend entre la structure 2 et une partie supérieure du carter extérieur 21 de la boîte de transmission de puissance 20. Ces barres de suspension 51 sont favorablement concourantes en étant chacune agencées le long de lignes se croisant en un point.

De plus, le système de suspension 50 peut comporter un moyen de reprise de couple 52 usuel, par exemple du type connu sous les dénominations « barbecue » ou « os à chien ». Ce moyen de reprise de couple 52 est par exemple agencé entre le fond de la boîte de transmission de puissance 20 et la structure 2.

Par ailleurs, le moteur 40 peut être un moteur thermique de type moteur à pistons ou turbomoteur. Par exemple, le moteur 40 est un turbomoteur. Ce turbomoteur comprend alors un générateur de gaz muni d'un compresseur 41, et au moins une turbine de puissance 42 agencée à la suite du générateur de gaz, puis une tuyère d'éjection de gaz 43 agencée à la suite de la turbine de puissance 42.

Une cloison pare-feu 300 schématisée sur la figure 1 peut être agencée à la suite du compresseur 41.

Le moteur 40 comporte en outre un carter dénommé « enveloppe extérieure 45 ». Cette enveloppe extérieure peut posséder une pluralité de pièces fixées les unes aux autres.

Le moteur 40 et la boîte de transmission de puissance 20 représentent deux équipements différents accouplés l'un à l'autre. Dès lors, le moteur 40 entraîne mécaniquement la boîte de transmission de puissance 20 par une ligne d'arbre de liaison non visible sur la figure 1, la ligne d'arbre de liaison s'étendant le long d'un axe d'entraînement AX longitudinal.

Contrairement à la boîte de transmission de puissance 20, le moteur 40 n'est pas fixé à la structure 2.

En effet, le moteur 40 est uniquement porté par la boîte de transmission de puissance 20. Par conséquent, le groupe motoréducteur 10 comprend un système d'accrochage 60 permettant d'attacher le moteur 40 à la boîte de transmission de puissance 20.

La position et l'orientation du moteur, présenté horizontalement et longitudinalement sur la figure 1, peuvent être modifiées pour limiter les efforts exercés sur le système d'accrochage 60 et la boîte de transmission de puissance 20.

Ce système d'accrochage 60 est muni d'au moins trois barres d'accrochage 61. Chaque barre d'accrochage 61 s'étend d'une extrémité 612 attachée au carter extérieur 21 vers une extrémité 611 attachée à l'enveloppe extérieure 45 du moteur 40.

Par exemple et en référence à la figure 2, le système d'accrochage 60 possède une barre d'accrochage 61 dite « barre d'accrochage supérieure 62 qui s'étend d'une partie supérieure du carter extérieur 21 vers l'enveloppe extérieure 45. De plus, le système d'accrochage 60 possède deux barres d'accrochage 61 dites « barres d'accrochage inférieures 63 » qui s'étendent chacune d'une partie inférieure du carter extérieur 21 vers l'enveloppe extérieure 45.

Indépendamment du type de barre d'accrochages 61, chaque barre d'accrochage 61 s'étend le long d'une droite 90. Les droites 90 des barres d'accrochage 61 sont concourantes.

En particulier, les droites 90 des barres d'accrochage 61 sont concourantes au niveau d'un point 91 localisé à proximité du centre de gravité CG du moteur 40, voire confondu avec ce entre de gravité CG.

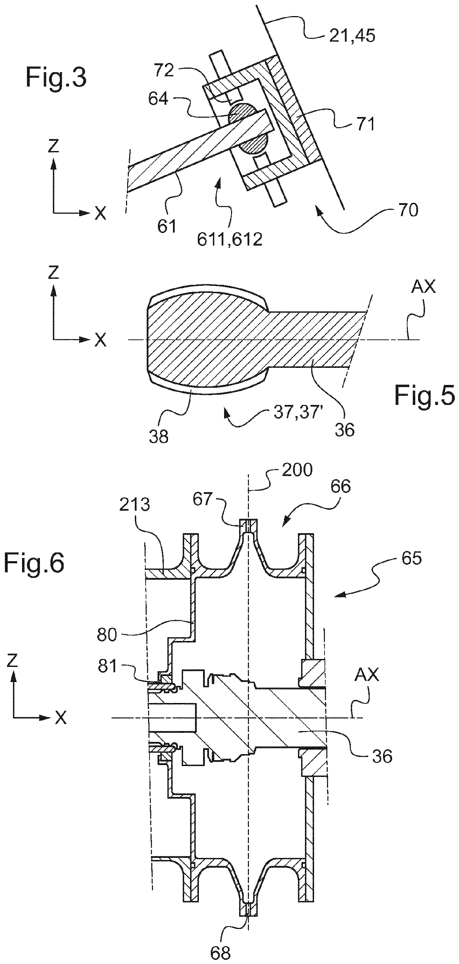

En référence à la figure 3, chaque extrémité 611, 612 est favorablement munie d'une articulation à rotule 64.

En outre, au moins une barre d'accrochage 61 coopère avec au moins un moyen d'absorption d'énergie et/ou de déplacement 70.

Par exemple, ce moyen d'absorption d'énergie et/ou de déplacement 70 comporte un bloc en élastomère 71 solidaire d'une chape portant ladite articulation à rotule. Le bloc en élastomère est alors interposé entre la chape et le carter extérieur 21 ou l'enveloppe extérieure 45.

Un bloc en élastomère 72 peut aussi représenter une chape en élastomère entourant l'articulation à rotule.

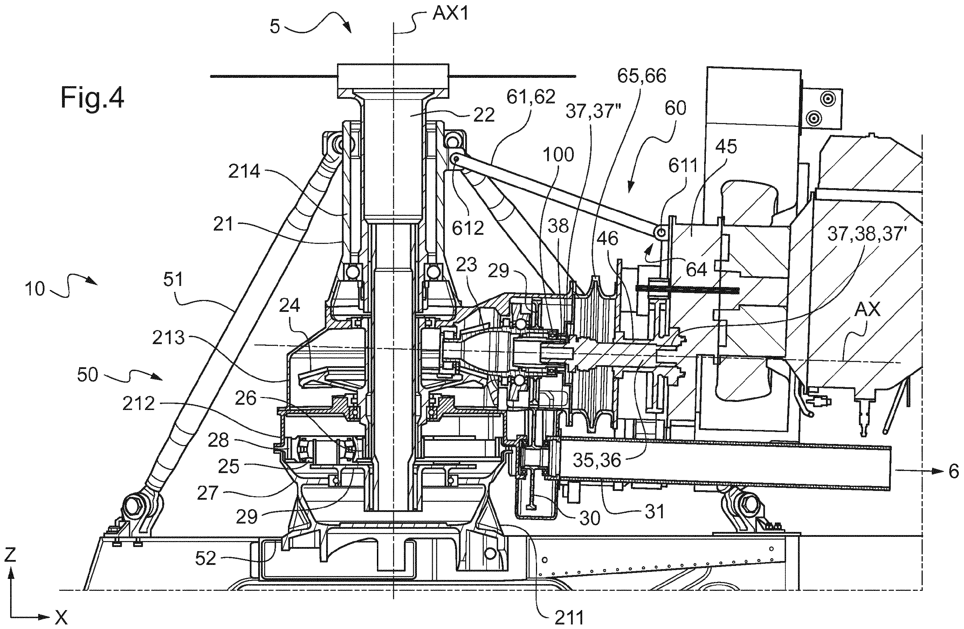

De plus et en référence à la figure 4, le système d'accrochage 60 comprend un organe de liaison 65. Cet organe de liaison 65 est par exemple muni d'un soufflet 66 fixé au carter extérieur 21 et à l'enveloppe extérieure 45. Le soufflet 66 entoure la ligne d'arbre de liaison 35.

Plus précisément, le moteur 40 est muni d'un arbre de sortie 46. Cet arbre de sortie 46 met alors en mouvement la ligne d'arbre de liaison 35.

A cet effet, la ligne d'arbre de liaison 35 comprend au moins un arbre de liaison 36. L'arbre de liaison 36 peut comprendre un ou plusieurs tronçons.

Cet arbre de liaison 36 est relié par un dispositif de liaison 37 dit « dispositif de liaison amont 37' » à l'arbre de sortie 46. Ce dispositif de liaison amont 37' présente une liberté de déplacement prédéterminée par rapport à l'arbre de sortie 46.

En référence à la figure 5, le dispositif de liaison amont 37' peut prendre la forme de cannelures bombées 38.

Par ailleurs et en référence à la figure 4, l'arbre de liaison 36 peut être relié par un dispositif de liaison 37 dit « dispositif de liaison aval 37" » à la boîte de transmission de puissance 20, le dispositif de liaison aval 37" présentant une liberté de déplacement prédéterminée par rapport à la boîte de transmission de puissance 20. Le dispositif de liaison aval 37" peut prendre la forme de cannelures bombées 38.

Dès lors, l'arbre de liaison 36 engrène par exemple une roue libre 100 mettant en rotation un arbre d'entrée 23 de la boîte de transmission de puissance 20.

Cet arbre d'entrée 23 met alors en mouvement une roue dentée 30 destinée à mettre en rotation la chaîne de transmission 31.

De plus, l'arbre d'entrée 23 entraîne une grande roue 24.

La grande roue 24 coopère alors avec un étage de réduction d'une vitesse de rotation. En particulier, la grande roue entraine un pignon planétaire 26 qui entraîne une pluralité de pignons satellites 25 portés par un porte-satellites 29. Les pignons satellites roulent alors sur une couronne 28 et mettent en rotation le porte-satellites. Ce porte-satellites entraîne alors en rotation le mât rotor autour d'un axe en élévation AX1.

Par ailleurs, la figure 4 détaille le carter extérieur 21. Ce carter extérieur 21 peut comporter une pluralité de sous-ensembles fixés les uns aux autre.

Ainsi, le carter extérieur 21 peut comporter un fond 211 portant le porte-satellite 29.

Ce fond 211 est solidaire d'une première portion intermédiaire 212 entourant la couronne 28. Les barres d'accrochage inférieures peuvent être reliées à cette première portion intermédiaire 212.

Le carter extérieur 21 comprend alors une deuxième portion intermédiaire 213 solidaire de la première portion intermédiaire 212. La deuxième portion intermédiaire 213 entoure la grande roue 24 et l'arbre d'entrée 23.

Enfin, le carter extérieur comprend une portion supérieure 214 solidaire de la deuxième portion intermédiaire 213. La portion supérieure 214 est fixée aux barres de suspension 51. De plus, les barres d'accrochage supérieures peuvent être reliées à cette portion supérieure 214.

Dès lors, le soufflet 66 de l'organe de liaison 65 est boulonné au carter extérieur 21 et à l'enveloppe extérieure 45. En particulier, le soufflet 66 est boulonné à la deuxième portion intermédiaire 213.

En référence à la figure 6, le soufflet 66 est rigide en torsion autour de l'axe d'entraînement AX.

Par contre, le soufflet 66 permet un déplacement relatif prédéterminé entre la boîte de transmission de puissance 20 et le moteur 40. Dès lors, le soufflet 66 est souple en torsion autour de directions comprises dans un plan 200 perpendiculaire à l'axe d'entraînement AX. De plus, le soufflet 66 est souple en compression et en traction selon l'axe d'entraînement AX.

Par exemple, le soufflet 66 est réalisé à partir d'un alliage d'aluminium et présente une géométrie permettant un désalignement entre le moteur et la boîte de transmission de puissance. Eventuellement, le soufflet peut présenter une forme illustrée dans le brevet FR 2 965 319.

Par ailleurs, l'organe de liaison 65 illustré comporte une plaque 80 annulaire s'étendant dans le soufflet 66. En particulier, la plaque 80 s'étend radialement du soufflet 66 vers l'axe d'entraînement AX. La plaque 80 n'est pas nécessairement plane. En outre, cette plaque peut soit être fixée au soufflet soit être solidaire du soufflet.

Un joint dynamique 81 est alors agencé entre la plaque 80 et la ligne d'arbre de liaison 35.

En outre, le soufflet 66 peut comporter un système de drainage. Ce système peut comprendre un orifice 68 ménagé dans l'épaisseur du soufflet 66.

Dès lors et en référence à la figure 4, les barres d'accrochage 61 permettent de suspendre le moteur 40 à la boîte de transmission de puissance 20.

De plus, le soufflet 66 de l'organe de liaison permet d'immobiliser en rotation autour de l'axe d'entraînement AX le moteur 40 par rapport à la boîte de transmission de puissance 20.

En revanche, le soufflet 66 autorise un désalignement axial ou angulaire du moteur 40 par rapport à la boîte de transmission de puissance 20. De même, la ligne d'arbre de liaison autorise un tel désalignement.

Un tel désalignement est néanmoins limité à une certaine amplitude par les barres d'accrochages rotulées.

En outre, le moteur 40 et la boîte de transmission de puissance 20 sont distincts ce qui permet de séparer leur système de lubrification.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Groupe motoréducteur (10) comportant une boîte de transmission de puissance (20) et au moins un moteur (40), ladite boîte de transmission de puissance (20) étant munie d'un système de suspension (50) destiné à suspendre la boîte de transmission de puissance (20) à une structure (2), la boîte de transmission de puissance (20) et ledit moteur (40) représentant respectivement deux équipements distincts, ledit moteur (40) entraînant mécaniquement ladite boîte de transmission de puissance (20) par une ligne d'arbre de liaison (35) s'étendant le long d'un axe d'entraînement (AX), ledit au moins un moteur (40) étant porté uniquement par la boîte de transmission de puissance (20) au travers d'un système d'accrochage (60),
**caractérisé en ce que** ledit système d'accrochage (60) comprend au moins trois barres d'accrochage (61) reliant chacune un carter extérieur (21) de la boîte de transmission de puissance (20) au moteur (40), ledit système d'accrochage (60) comprenant un organe de liaison (65) fixé audit carter extérieur (21) et à une enveloppe extérieure (45) du moteur, ledit organe de liaison (65) étant rigide en torsion autour dudit axe d'entraînement (AX) et permettant un déplacement relatif prédéterminé entre ladite boîte de transmission de puissance (20) et ledit moteur (40).

2. Groupe motoréducteur selon la revendication 1,
**caractérisé en ce que** chaque barre d'accrochage (61) s'étend entre deux extrémités (611, 612), chaque extrémité (611, 612) étant munie d'une articulation à rotule (64).

3. Groupe motoréducteur selon l'une quelconque des revendications 1 à 2,
**caractérisé en ce que** chaque barre d'accrochage (61) s'étend le long d'une droite (90), lesdites droites (90) desdites barres d'accrochage (61) étant concourantes.

4. Groupe motoréducteur selon la revendication 3,
**caractérisé en ce que** lesdites droites (90) desdites barres d'accrochage (61) sont concourantes au niveau du centre de gravité (CG) du moteur (40).

5. Groupe motoréducteur selon l'une quelconque des revendications 1 à 4,
**caractérisé en ce qu'**au moins une barre d'accrochage (61) coopère avec au moins un moyen d'absorption d'énergie et/ou de déplacement (70).

6. Groupe motoréducteur selon la revendication 5,
**caractérisé en ce que** ledit moyen d'absorption d'énergie et/ou de déplacement (70) comporte un bloc en élastomère (71, 72).

7. Groupe motoréducteur selon l'une quelconque des revendications 1 à 6,
**caractérisé en ce que** ladite ligne d'arbre de liaison (35) présente un arbre de liaison (36) relié par un dispositif de liaison (37) dit « dispositif de liaison amont (37') » au moteur (40), ledit dispositif de liaison amont (37') présentant une liberté de déplacement prédéterminée par rapport au moteur (40).

8. Groupe motoréducteur selon l'une quelconque des revendications 1 à 7,
**caractérisé en ce que** ladite ligne d'arbre de liaison (35) présente un arbre de liaison (36) relié par un dispositif de liaison (37) dit « dispositif de liaison aval (37") » à la boîte de transmission de puissance (20), ledit dispositif de liaison aval (37") présentant une liberté de déplacement prédéterminée par rapport à la boîte de transmission de puissance (20).

9. Groupe motoréducteur selon l'une quelconque des revendications 7 à 8,
**caractérisé en ce qu'**au moins un desdits dispositifs de liaison amont (37') et aval (37") présente des cannelures bombées (38).

10. Groupe motoréducteur selon l'une quelconque des revendications 1 à 9,
**caractérisé en ce que** ledit organe de liaison (65) est rigide uniquement en torsion autour dudit axe d'entraînement (AX), ledit organe de liaison (65) étant souple en torsion autour de directions comprises dans un plan (200) perpendiculaire à l'axe d'entraînement, l'organe de liaison (65) étant souple en compression et en traction selon ledit axe d'entraînement (AX).

11. Groupe motoréducteur selon l'une quelconque des revendications 1 à 10,
**caractérisé en ce que** ledit organe de liaison (65) comporte un soufflet (66) entourant ladite ligne d'arbre de liaison (35),

12. Groupe motoréducteur selon la revendication 11,
**caractérisé en ce que** ledit organe de liaison (65) présente une plaque annulaire (80) interne s'étendant radialement à partir dudit soufflet (66) vers l'axe d'entraînement (AX), un joint dynamique (81) étant agencé entre ladite plaque (80) et ladite ligne d'arbre de liaison (35).

13. Groupe motoréducteur selon l'une quelconque des revendications 1 à 12,
**caractérisé en ce que** ledit système de suspension (50) comporte au moins trois barres de suspension (51).

14. Groupe motoréducteur selon l'une quelconque des revendications 1 à 13,
**caractérisé en ce que** ledit système de suspension (50) comporte un moyen de reprise de couple (52).

15. Groupe motoréducteur selon l'une quelconque des revendications 1 à 14,
**caractérisé en ce que** ladite boîte de transmission de puissance (20) est munie d'un mât (22) destiné à mettre en rotation un rotor d'un aéronef (1).

16. Groupe motoréducteur selon l'une quelconque des revendications 1 à 15,
**caractérisé en ce que** ladite boîte de transmission de puissance (20) est munie d'une roue dentée (30) destinée à entraîner une chaîne de transmission (31).

17. Aéronef (1),
**caractérisé en ce que** ledit aéronef (1) comporte un groupe motoréducteur (10) selon l'une quelconque des revendications 1 à 16.

## Patentansprüche

1. Untersetzungsgetriebeeinheit (10) mit einem Leistungsgetriebe (20) und mindestens einem Motor (40), wobei das Leistungsgetriebe (20) mit einem Aufhängungssystem (50) versehen ist, das dazu bestimmt ist, das Leistungsgetriebe (20) an einer Struktur (2) aufzuhängen, wobei das Leistungsgetriebe (20) und der Motor (40) jeweils zwei getrennte Ausrüstungen darstellen, wobei der Motor (40) mechanisch das Leistungsgetriebe (20) über einen Verbindungswellenstrang (35) antreibt, der sich entlang einer Antriebsachse (AX) erstreckt, wobei der mindestens eine Motor (40) über ein Aufhängungssystem (60) ausschließlich von dem Leistungsgetriebe (20) getragen wird,
**dadurch gekennzeichnet**, das das Aufhängungssystem (60) mindestens drei Aufhängungsstangen (61) aufweist, die jeweils ein äußeres Gehäuse (21) des Leistungsgetriebes (20) mit dem Motor (40) verbinden, wobei das Aufhängungssystem (60) ein Verbindungselement (65) aufweist, das an dem Außengehäuse (21) und einer äußeren Hülle (45) befestigt ist, wobei das Verbindungselement (65) torsionssteif um die Antriebsachse (AX) ist und eine vorbestimmte Relativbewegung zwischen dem Leistungsgetriebe (20) und dem Motor (40) erlaubt.

2. Untersetzungsgetriebeeinheit nach Anspruch 1,
**dadurch gekennzeichnet, dass** jede Aufhängungsstange (61) sich zwischen zwei Enden (611, 612) erstreckt, wobei jedes Ende (611, 612) mit einem Kugelgelenk (64) versehen ist.

3. Untersetzungsgetriebeeinheit nach einem der Ansprüche 1 bis 2,
**dadurch gekennzeichnet, dass** jede Aufhängungsstange (61) sich entlang einer Geraden (90) erstreckt, wobei die Geraden (90) der Aufhängungsstangen (61) konvergieren.

4. Untersetzungsgetriebeeinheit nach Anspruch 3,
**dadurch gekennzeichnet, dass** die Geraden (90) der Aufhängungsstangen (61) auf der Höhe des Schwerpunkts (CG) des Motors (40) konvergieren.

5. Untersetzungsgetriebeeinheit nach einem der Ansprüche 1 bis 4,
**dadurch gekennzeichnet, dass** mindestens eine Aufhängungsstange (61) mit mindestens einem Energieabsorptionsmittel und/oder einem Bewegungsmittel (70) zusammenwirkt.

6. Untersetzungsgetriebeeinheit nach Anspruch 5,
**dadurch gekennzeichnet, dass** das Energieabsorptionsmittel und/oder Bewegungsmittel (70) einen Elastomerblock (71, 72) aufweist.

7. Untersetzungsgetriebeeinheit nach einem der Ansprüche 1 bis 6,
**dadurch gekennzeichnet, dass** der Verbindungswellenstrang (35) eine Verbindungswelle (36) aufweist, die über eine Verbindungsvorrichtung (37), die "vordere Verbindungsvorrichtung (37')" genannt wird, mit dem Motor (40) verbunden ist, wobei die vordere Verbindungsvorrichtung (37') eine vorbestimmte Bewegungsfreiheit relativ zu dem Motor (40) aufweist.

8. Untersetzungsgetriebeeinheit nach einem der Ansprüche 1 bis 7,
**dadurch gekennzeichnet, dass** der Verbindungswellenstrang (35) eine Verbindungswelle (36) aufweist, die über eine Verbindungsvorrichtung (37), die "hintere Verbindungsvorrichtung (37")" genannt wird, mit dem Leistungsgetriebe (20) verbunden ist, wobei die hintere Verbindungsvorrichtung (37") eine vorbestimmte Bewegungsfreiheit relativ zu dem Leistungsgetriebe (20) aufweist.

9. Untersetzungsgetriebeeinheit nach einem der Ansprüche 7 bis 8,
**dadurch gekennzeichnet, dass** mindestens eine der vorderen und hinteren Verbindungsvorrichtungen (37', 37") gewölbte Rillen (38) aufweist.

10. Untersetzungsgetriebeeinheit nach einem der Ansprüche 1 bis 9,
**dadurch gekennzeichnet, dass** das Verbindungselement (65) ausschließlich gegenüber einer Torsion um die Antriebsachse (AX) steif ist, wobei das Verbindungselement (65) torsionsnachgiebig um Richtungen ist, die in einer Ebene (200) liegen, die senkrecht zu der Antriebsachse liegt, wobei das Verbindungselement (65) nachgiebig gegenüber Druck und Zug in der Richtung der Antriebsachse (AX) ist.

11. Untersetzungsgetriebeeinheit nach einem der Ansprüche 1 bis 10,
**dadurch gekennzeichnet, dass** das Verbindungselement (55) einen Faltenbalg (66) aufweist, der den Verbindungswellenstrang (35) umgibt.

12. Untersetzungsgetriebeeinheit nach Anspruch 11,
**dadurch gekennzeichnet, dass** das Verbindungselement (65) eine ringförmige innere Scheibe (80) aufweist, die sich radial ausgehend von dem Faltenbalg (66) zu der Antriebsachse (AX) erstreckt, wobei eine dynamische Dichtung (81) zwischen der Scheibe (80) und dem Verbindungswellenstrang (35) angeordnet ist.

13. Untersetzungsgetriebeeinheit nach einem der Ansprüche 1 bis 12,
**dadurch gekennzeichnet, dass** das Aufhängungssystem (50) mindestens drei Aufhängungsstangen (51) aufweist.

14. Untersetzungsgetriebeeinheit nach einem der Ansprüche 1 bis 13,
**dadurch gekennzeichnet, dass** das Aufhängungssystem (50) eine Drehmomentstütze (52) aufweist.

15. Untersetzungsgetriebeeinheit nach einem der Ansprüche 1 bis 14,
**dadurch gekennzeichnet, dass** das Leistungsgetriebe (20) mit einer Welle (22) versehen ist, die dazu bestimmt ist, einen Rotor eines Luftfahrzeugs (1) zu drehen.

16. Untersetzungsgetriebeeinheit nach einem der Ansprüche 1 bis 15,
**dadurch gekennzeichnet, dass** das Leistungsgetriebe (20) mit einem Zahnrad (30) versehen ist, das dazu bestimmt ist, eine Getriebekette (31) anzutreiben.

17. Luftfahrzeug (1),
**dadurch gekennzeichnet, dass** das Luftfahrzeug eine Untersetzungsgetriebeeinheit (10) nach einem der Ansprüche 1 bis 16 aufweist.

## Claims

1. A gear motor assembly (10) comprising a power transmission gearbox (20) and at least one motor (40), said power transmission gearbox (20) being provided with a suspension system (50) intended for suspending the power transmission gearbox (20) from a structure (2), the power transmission gearbox (20) and said engine (40) representing respectively two separate items of equipment, said motor (40) mechanically driving said power transmission gearbox (20) via a connecting shaft line (35) extending along a driving axis (AX),
said at least one motor (40) being borne solely by the power transmission gearbox (20) via an attachment system (60), **characterised in that** said attachment system (60) comprises at least three attachment bars (61), each connecting an outer casing (21) of the power transmission gearbox (20) to the motor (40), said attachment system (60) comprising a connection member (65) fastened to said outer casing (21) and to an outer case (45) of the motor (40), said connection member (65) being rigid in torsion about said driving axis (AX) and permitting a predetermined relative displacement between said power transmission gearbox (20) and said motor (40).

2. A gear motor assembly according to Claim 1,
**characterised in that** each attachment bar (61) extends between two ends (611, 612), each end (611, 612) being provided with a ball joint (64).

3. A gear motor assembly according to any one of Claims 1 to 2,
**characterised in that** each attachment bar (61) extends along a straight line (90), said straight lines (90) of said attachment bars (61) being concurrent.

4. A gear motor assembly according to Claim 3,
**characterised in that** said straight lines (90) of said attachment bars (61) are concurrent at the level of the centre of gravity (CG) of the motor (40).

5. A gear motor assembly according to any one of Claims 1 to 4,
**characterised in that** at least one attachment bar (61) cooperates with at least one energy absorption and/or displacement means (70).

6. A gear motor assembly according to Claim 5,
**characterised in that** said energy absorption and/or displacement means (70) comprises a block made of elastomer (71, 72).

7. A gear motor assembly according to any one of Claims 1 to 6,
**characterised in that** said connecting shaft line (35) has a connecting shaft (36) connected by a connecting device (37) referred to as "upstream connecting device (37')" to the motor (40), said upstream connecting device (37') having a predetermined freedom of displacement relative to the motor (40).

8. A gear motor assembly according to any one of Claims 1 to 7,
**characterised in that** said connecting shaft line (35) has a connecting shaft (36) connected by a connecting device (37) referred to as "downstream connecting device (37")" to the power transmission gearbox (20), said downstream connecting device (37") having a predetermined freedom of displacement relative to the power transmission gearbox (20).

9. A gear motor assembly according to any one of Claims 7 to 8,
**characterised in that** at least one of said upstream (37')and downstream (37") connection devices has bellied splines (38).

10. A gear motor assembly according to any one of Claims 1 to 9,
**characterised in that** said connection member (65) is rigid solely in torsion about said driving axis (AX), the said connection member (65) being flexible in torsion about directions included in a plane (200) perpendicular to the driving axis, the connection member (65) being flexible in compression and in traction along said driving axis (AX).

11. A gear motor assembly according to any one of Claims 1 to 10,
**characterised in that** said connection member (65) comprises a bellows (66) surrounding said connecting shaft line (35).

12. A gear motor assembly according to Claim 11,
**characterised in that** said connection member (65) has an internal annular plate (80) extending radially starting from said bellows (66) towards the driving axis (AX), a dynamic seal (81) being arranged between said plate (80) and said connecting shaft line (35).

13. A gear motor assembly according to any one of Claims 1 to 12,
**characterised in that** said suspension system (50) comprises at least three suspension bars (51).

14. A gear motor assembly according to any one of Claims 1 to 13,
**characterised in that** said suspension system (50) comprises a torque pickup means (52).

15. A gear motor assembly according to any one of Claims 1 to 14,
**characterised in that** said power transmission gearbox (20) is provided with a pylon (22) intended to cause a rotor of an aircraft (1) to rotate.

16. A gear motor assembly according to any one of Claims 1 to 15,
**characterised in that** said power transmission gearbox (20) is provided with a toothed wheel (30) intended to drive a transmission chain (31).

17. An aircraft (1),
**characterised in that** said aircraft (1) comprises a gear motor assembly (10) according to any one of Claims 1 to 16.
